# EUROPÄISCHE PATENTSCHRIFT

(11) **EP 2 400 608 B1**
(45) Veröffentlichungstag und Bekanntmachung des Hinweises auf die Patenterteilung: **14.11.2018**
(21) Anmeldenummer: 11170224.7
(22) Anmeldetag: 16.06.2011
(51) Int. Cl.: H02B 1/00, H02B 1/04, F21K 99/00, H01H 13/02, H05B 37/02

(54) **Modular aufgebautes Meldegerät zur Vernetzung und Signalisierung mit Befehls- und Meldegeräten**
Modular warning device for networking and signalling with control and warning devices
Appareil de communication de fabrication modulaire pour mise en réseau et signalisation avec appareils de commande et de signalisation

(30) Priorität: 26.06.2010 DE 102010025241
(43) Veröffentlichungstag der Anmeldung: 28.12.2011
(73) Patentinhaber: Eaton Industries GmbH, 53115 Bonn (DE)
(72) Erfinder: Freyermuth, Thomas, 53505 Kalenborn (DE); Arndt, Karl-Heinz, 53859 Niederkassel (DE); Raetz, Reinhard, 53859 Niederkassel (DE)
(74) Vertreter: Leadbetter, Benedict

(56) Entgegenhaltungen:
- EP-A2- 1 251 722
- EP-A2- 1 413 997
- DE-U1- 20 215 150
- DE-U1- 29 706 521
- DE-U1-202005 006 549

## Beschreibung

Die Erfindung betrifft ein modular aufgebautes Meldegerät zur Vernetzung und Signalisierung mit gemeinsam an eine Bus- und Versorgungsleitung aufgeschalteten Befehls- oder Meldegeräten.

Bekannt ist ein System zur Verdrahtung und Vernetzung von elektromechanischen Geräten, insbesondere von Meldegeräten (DE 29508773 U1). Das System umfasst mindestens ein Gerät oder einen Funktionsbaustein zum Einsetzen auf einer Schalttafel oder in einem Schaltschrank und einen Adapter zur Befestigung auf einer Busleitung, wobei das Gerät oder der Funktionsbaustein auf seiner Rückseite Steckanschlüsse und auf seiner Vorderseite Funktionselemente (zur Bedienung und/oder Anzeige) aufweist. Ein solches elektromechanisches Gerät kann weiterhin Rastelemente (Rasthaken) aufweisen zum vorderseitigen oder rückseitigen Aufrasten.

Weiterhin sind Meldegeräte zum Anschluss an eine Busleitung bekannt, auf die ein sogenannter Anzeigekopf aufgesteckt werden kann. Im Anzeigekopf kann ein Leuchtelement untergebracht sein (DE 29606721 U1).

Die Erfindung geht aus von einem modular aufgebauten Meldegerät zur Vernetzung und Signalisierung mit gemeinsam an eine Bus- und Versorgungsleitung aufgeschalteten Befehls- und Meldegeräten. Dieser Stand der Technik findet sich in: "Produktinformation - Smartwire-Darwin" - WO211-7601de ip/DFS 08/09 (2009) als download unter www.moeller.net.

Es ist bisher nicht üblich, Meldegeräte in ihrer Helligkeit einstellbar zu machen. Bisher sind Meldegeräte mit Leuchtmitteln ausgestattet, die eine maximale Helligkeit liefern, um Meldungen bei schwachem Licht oder bei Kunstlicht gut erkennbar zu machen. Als 'Nachfolger' kleiner Glühlampen mit beschränkter Leistung, deren Verlustleistung in den Bauraum noch abgeführt werden konnte, werden heute LEDs, bzw. Leistungs-LEDs mit erhöhter Lichtleistung eingesetzt. Gerade bei Anwendungen in geringer Umgebungshelligkeit kann dies zum Problem der Überstrahlung führen.

Es entsteht jedoch der Wunsch, dass die Lichtleistung veränderlich geschaltet werden kann. Allerdings ist der technische Aufwand relativ groß, um konventionelle Befehls- und Meldegeräte umzurüsten. Üblicherweise hängen Meldegeräte und Leuchtmittel an derselben Versorgungsspannung. Eine Trennung der Versorgungsspannung für Meldegeräte und Leuchtmittel wäre nötig. Damit entstehen erhöhter Material- und Arbeitsaufwand und höhere Kosten. Weiter nicht zu vergessen, dass durch verschiedene (oder zusätzliche) Netzteile erhöhte Verluste auftreten. Insgesamt vermindert sich dann die Energieeffizienz der Geräte. Es können auch elektronische Funktionsprobleme entstehen, wenn eine zentrale Steuerung Signale unterschiedlicher Spannungen zu verarbeiten hat.

Es ist daher die Aufgabe der Erfindung, Stromversorgung und Spannung von Leuchtmitteln an Meldegeräten veränderbar zu gestalten.

Die Lösung der Aufgabe findet sich in den Merkmalen des Hauptanspruchs. Weiterführende und vorteilhafte Ausgestaltungen sind in Unteransprüchen formuliert.

Mit der Erfindung wird durch Integration von speziellen Funktionen in einem Meldegerät eine Lösung dargestellt. Der Kern der Erfindung besteht in der statischen und zeitlichen Veränder- und Steuerbarkeit der Lichtleistung des Leuchtmittels.

Die Erfindung wird in einem modular aufgebauten Meldegerät zur Vernetzung und Signalisierung mit gemeinsam an eine Bus- und Versorgungsleitung aufgeschalteten Befehls- und Meldegeräten umgesetzt. Meldegeräte dienen vornehmlich der Darstellung einer Meldung über eine optische Anzeige.

Typische Spannungen an Versorgungsleitungen liegen typisch etwa bei 16 oder 24 V. Das Meldegerät umfasst folgende Module:
- einen Meldebaustein mit einem optischen Anzeigemittel, insbesondere zur Anzeige eines Betriebszustands (EIN oder AUS) eines elektrischen Betriebsmittels, beispielsweise eines Elektromotors oder einer Motorsteuerung, und mit in seinem Gehäuse gelagerten Elektronik-Baustein zur Buskommunikation,
- ein auf einer Anzeigeseite des Meldebausteins dem Meldebaustein vorgelagertes Frontmodul mit einem Anzeigekopf und
- ein Bus-Kupplungsmodul zur Kupplung des Meldebausteins auf einer der Anzeigeseite gegenüberliegenden Rückseite des Meldebausteins mit der Bus- und Versorgungsleitung,
wobei im Elektronik-Baustein die Lichtleistung (bzw. Helligkeit) bestimmende Leistungsparameter des optischen Anzeigemittels abgelegt oder programmiert sind. Die programmierten Leistungsparameter (oder Aktivitätszustände) können weiterhin durch Eingriff eines Bedieners geändert werden.

Die Leistungsparameter, die insbesondere durch Ansteuerung der Spannungsversorgung des optischen Anzeigemittels bestimmt werden, sind im Einzelnen: Dauerlicht unterschiedlicher Helligkeit und/oder zeitlicher Verlauf oder Änderung der Lichtleistung, insbesondere bestehend aus bestimmten periodischen oder unperiodischen Blinkfolgen (ebenfalls unterschiedlicher Helligkeit).

In Gegensatz zu bekannten Meldegeräten ist nach der Erfindung die Helligkeit des Leuchtmittels nunmehr steuerbar.

Unter Verwendung einer Bus-Slave-Schaltung sind mehrere Befehls- und Meldegeräte an die Bus- und Versorgungsleitung anschließbar. Der Bus kann ein ASI-Bus sein. Die zentrale Bus-Steuerung wird so ausgestaltet, dass von dort die notwendigen Steuerdaten für Anzeigemittel - vornehmlich Leuchtdioden (LED oder OLED) - generiert, übermittelt, angesteuert und umgeschaltet werden. Dies ist sowohl möglich für ein angeschaltetes Meldegerät allein, als auch für mehrere angeschaltete Meldegeräte, die vorzugsweise auch ausgewählt, gruppenweise ansteuerbar sind. Der Anwender kann mit einem Anwenderprogramm zur Programmierung der zentralen Bus-Steuerung und der Elektronik-Schaltung (CHIP) im Meldegerät auf diese Steuerdaten Einfluss nehmen. Die eingesetzte Soft- und Hardware (z.B. nicht-flüchtiger Speicher, LED-Treiber) wird entsprechend gestaltet.

Die Erfindung ist in mehreren, vorteilhaften Ausgestaltungen beschrieben, deren Merkmale einzeln oder in Kombination miteinander beansprucht sein können.

Die Leistungsparameter (oder Aktivitätszustände) bestehen daher vorrangig aus mehreren Helligkeitsstufen oder Lichtleistungen zwischen 0 (AUS) und 100 % (EIN), und unterschiedlichen Blinkfolgen. Jede ist (vornehmlich über einen 1-byte-Befehl der zentralen Bus-Steuerung) jeweils auswählbar, so dass bei EIN-Schaltung des Anzeigemittels ein vor dem EIN-Schalt-Zustand vorhandener Leistungsparameter wiederum angesteuert wird, oder ein im EIN-Schalt-Zustand aktivierter Leistungsparameter geändert wird oder ein vor dem EIN-Schalt-Zustand vorhandener Leistungsparameter nicht wiederum aktiviert wird.

Eine der Blinkfolgen kann ein unregelmäßiges Flackerlicht sein. Flackerlicht dient besonders zur Anregung der Aufmerksamkeit von Bedienpersonen, so dass unperiodische Blinkfolgen vorzugsweise zur Anzeige von Unregelmäßigkeiten im Betriebsablauf oder von Gefahrenzuständen eingesetzt werden sollen.

Mindestens ein Leistungsparameter kann über ein Mess-Signal eines an der Bus- und Versorgungsleitung aufgeschalteten Helligkeitssensors einstellbar sein. Der Einsatz eines Helligkeitssensors hat den Vorteil, dass bei Änderung der Umgebungshelligkeit die Lichtleistung von an der Bus- und Versorgungsleitung angeschalteter Meldebausteine insgesamt oder in Gruppen ebenfalls abgeändert, beispielsweise gedimmt werden. Vorzugsweise kann dieser Vorgang automatisch erfolgen.

Die elektronische Schaltung (Chip) des Meldebausteins ist beispielsweise so programmiert, dass die Schaltung die Spannungsversorgung zum Leuchtelement taktet (puls-code-moduliert). Regelmäßiges Takten führt zu einer Verringerung der Lichtleistung (Dimmung), wobei die Taktfrequenz den Grad der Herabsetzung der Lichtleistung bestimmt. Kombiniert oder überlagert kann die taktweise Ansteuerung mit periodischen oder unperiodischen Blinkfolgen sein, so dass das Leuchtelement bei einer bestimmten Grundhelligkeit entsprechendes Flackerlicht erzeugt.

Das vorgelagerte Frontmodul kann mit dem Meldebaustein verrastbar ausgebildet sein oder es kann als Abdeckung einer vorderseitigen Öffnung eines das Meldegerät aufnehmenden Meldegerät-Gehäuses ausgebildet sein. Am Frontmodul können somit Befestigungsmittel zum lösbaren Einsetzen des Frontmoduls in eine Öffnung einer Schalttafel oder eines Schaltschranks vorhanden sein.

Der Meldebaustein kann zusätzlich mit einem Betätigungsstößel versehen sein, der von in dem Frontmodul vorhandenen Betätigungsmitteln beaufschlagbar ist.

Es sind elektrische Kontaktmittel auf einer der Anzeigenseite gegenüber liegenden Rückseite des Meldebausteins zum Kuppeln mit dem Bus-Kupplungsmodul vorhanden, wobei mit Steck- oder Schneidkontakten die Bus- und Versorgungsleitung kontaktiert wird. Ebenfalls auf der Rückseite des Meldebausteins kann ein optisches Anzeigemittel (LED oder OLED) zur Anzeige des Bus-Status vorhanden sein.

Im Meldebaustein können weiterhin Kontakte zum Kontaktieren eines auf einer Seitenfläche des Meldebausteins (Fläche liegt senkrecht zur Anzeigeseite) an den Meldebaustein aufrastbaren Kontaktbaustein ausgebildet sein.

Die Erfindung wird in mehreren Figuren dargestellt, die jeweils im Einzelnen zeigen:
Fig. 1A und 1B: zwei modular aufgebaute Meldegeräte als Stand der Technik;
Fig. 2: Darstellung eines Meldebausteins (innen);
Fig. 3: Darstellung eines Meldebausteins mit Busanschluss-Kontakten und
Fig. 4: Darstellung einer Halbschale eines Meldebausteins von außen.

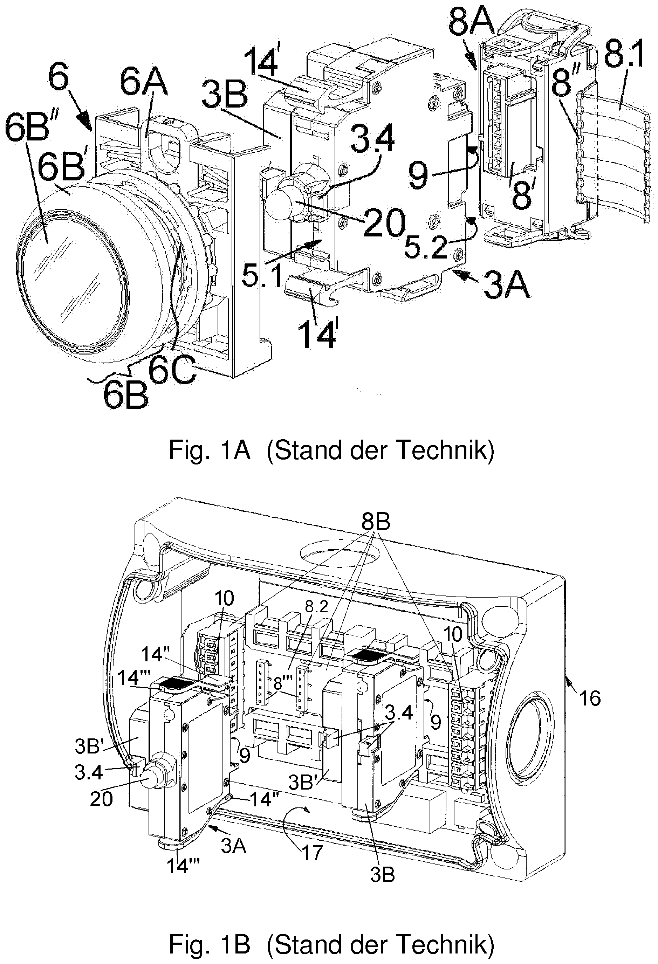

Die Fig. 1A und 1B zeigen zwei modular aufgebaute Meldegeräte der Anmelderin (als Stand der Technik) zur Vernetzung und Signalisierung mit gemeinsam an eine Bus- und Versorgungsleitung aufgeschalteten Befehls- und Meldegeräten.

Die in Fig. 1A gezeigten Module sind ein Meldebaustein 3A, ein Frontmodul 6, ein Bus-Kupplungsmodul 8A und 8B, ein dem Meldebausstein seitlich aufgesteckter Befehls- oder Kontaktbaustein 3B.

Der Meldebaustein 3A weist ein optisches Anzeigemittel (LED 20) auf, insbesondere zur Anzeige eines Betriebszustands (EIN und AUS) eines elektrischen Betriebsmittels, beispielsweise eines Elektromotors oder einer Motorsteuerung. Weiterhin ist am Meldebaustein ein Betätigungsstößel 3.4 vorhanden, der von im Frontmodul ausgebildeten Betätigungsmitteln 6B" betätigt werden kann.

Das Frontmodul 6 ist mit der Anzeigeseite 5.1 (Vorderseite) des Meldebausteins 3A verrastbar ausgebildet. Dazu befindet sich am Frontmodul 6 ein Adapterrahmen 6A. Zur Verrastung mit dem Meldebaustein sind am Meldebaustein 3A Rastnasen 14' vorhanden. Im Adapterrahmen 6A können weitere Bausteine verrastet werden. Der in Fig. 1A gezeigte Befehlsbaustein 3B rastet ebenfalls in den Adapterrahmen 6A ein. Ein Befehlsbaustein 3B zeichnet sich dadurch aus, dass er ebenfalls einen Betätigungsstößel aufweist.

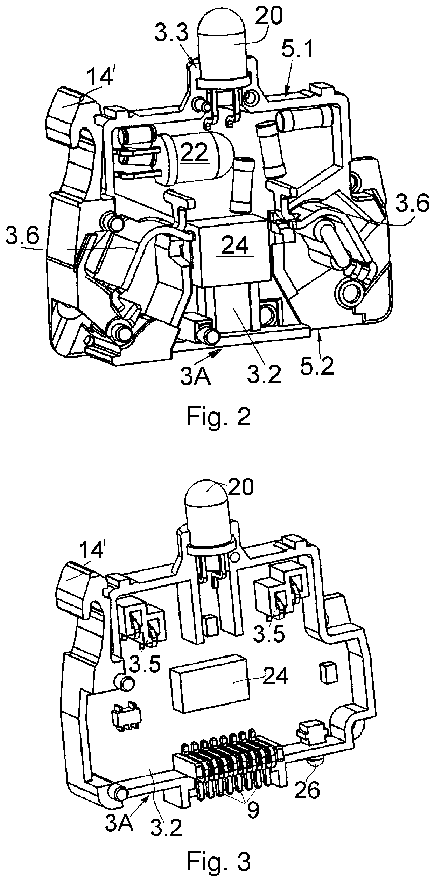

Durch eine Anordnung mehrerer Bausteine nebeneinander in einem Frontmodul wird das modulare System um ein weiteres Kontaktsystem erweitert, nämlich durch den Kontakt im Befehlsbaustein 3B. Mit dem zusätzlichen Kontakt kann eine zweite Stellung des Druckknopfs 6B" abgefragt werden und die Kontaktbetätigung an den Elektronik-Baustein 24 (siehe Fig. 2 oder 3) im Meldebaustein 3A übermittelt werden.

Am Frontmodul ist weiterhin ein Anzeigekopf 6B vorhanden. Dieser ragt über einen Schaft 6C zur Bedienerseite des Meldebausteins nach vorn. Auf den Schaft ist ein Ring 6B' aufgesetzt. Der genannte Schaft 6C wird durch eine Öffnung einer Frontplatte einer Schalttafel oder eines Geräts oder dergleichen geführt und mit dem Ring 6B' gesichert. Das innere zylindrische Teil des Schafts 6C ist als transparenter Druckknopf 6B" in Richtung auf den Meldebaustein betätigbar; wodurch der am Meldebaustein vorhandener Betätigungsstößel 3.4 beaufschlagbar ist. Mit diesem Aufbau hat das modulare Ensemble die Funktion eines Schalters mit Leuchtanzeige, die durch das Leuchtmittel 20 (LED oder OLED) zustande kommt.

Auf der Rückseite 5.2 des Meldebausteins 3A, welche der Anzeigeseite 5.1 des Meldebausteins gegenüberliegt, befinden sich Steckkontakte 9 (siehe Fig. 3) zum Kontaktieren mit der Steckbuchse 8' des Bus-Kupplungsmoduls 8A, über den der Meldebaustein 3A mit der Bus- und Versorgungsleitung 8.1 gekuppelt wird. Im Bus-Kupplungsmodul 8A sind Schneidkontakte 8" vorhanden, die in die Bus-Flachleitung 8.1 greifen, wodurch eine Spannungsversorgung (beispielsweise 16 V oder 24 V) abgegriffen wird und Meldesignale vom Meldebaustein 3A zur zentralen Bus-Steuerung (und zurück) übermittelt werden.

Das Meldegerät hat somit vornehmlich eine optische Anzeigefunktion auf Frontplatten von Geräten oder Schaltkästen und ist dort lösbar befestigt. Das Befehlsgerät mit beleuchtbarem Taster/Schalter-Knopf funktioniert als Meldegerät mit Kontroll-Lampe, wobei unterschiedlich farbige Kappen (6B") verschiedenen elektrischen Betriebsmitteln (z.B. Elektromotoren) zugeordnet sind. Mit dem von der LED von innen beleuchteten Taster/Schalter-Knopf werden einem Bediener ein- oder zwei Schaltzustände signalisiert. Neben der Anzeigefunktion ist eine Befehlsfunktion realisiert, wenn am Meldebaustein ein Betätigungsstößel vorhanden ist. Durch Betätigung über den Druckknopf 6B" wird mindestens eine Kontaktstellung weitergeben. Wie erwähnt, ist die Übermittlung einer zweiten Kontaktstellung mit dem Befehlsbaustein 3B möglich. Die Auswertung der Kontaktstellungen und Weitergabe der Meldung erfolgt über den Elektronik-Baustein 24 zum Bussystem und an eine zentrale Bus-Steuerung.

Die Fig. 1B zeigt ein zweites bekanntes Gerät. Ein oder mehrere Meldebausteine 3A oder Kontaktbausteine 3B können über ein Bus-Kupplungsmodul 8B auf einer Grundplatte eines Meldegerät-Gehäuses 16 an die Bus- und Versorgungsleitung 8.2 angeschaltet werden. Zur Befestigung des in Fig. 1B gezeigten Meldebausteins 3A oder Kontaktbausteins 3B sind in Richtung zum Bus-Kupplungsmodul 8.2 Rasthaken 14" seitlich am jeweiligen Gehäuse vorhanden. Diese Rasthaken 14" sind über Filmscharniere am Gehäuse angelenkt und über je einen Betätigungshebel 14"' schwenkbar.

Die Bus- und Versorgungsleitung ist in dieser Ausführungsform als Leiterplatte 8.2 ausgeführt und verläuft zwischen den beiden Kabelklemmleisten 10 (von links nach rechts in der Figur) auf dem Gehäuseboden des Meldegerät-Gehäuses 16. Die Klemmleisten 10 haben (hier im Beispiel) acht Kabelklemmstellen zur Anklemmung einer acht-adrigen Bus- und Versorgungsleitung, die selbst nicht gezeigt ist. Diese Bus- und Versorgungsleitung kann als Rundkabel ausgebildet und durch die seitlichen runden Öffnungen im Meldegerät-Gehäuse hindurchgeführt sein. Auf der Leiterplatte 8.2 finden sich Steckerleisten 8'" (davon zwei sichtbar) zum Stecken mit den rückseitigen Kontakten 9 von Meldebaustein 3A oder Befehlsbaustein 3B. Zu erkennen ist weiterhin, dass dem Meldebaustein 3A und dem Kontaktbaustein 3B je ein Kontaktbaustein 3B' parallel aufgerastet ist.

Das Meldegerät-Gehäuse 16 hat zur Frontseite eine Gehäuseöffnung 17, die mit einer Abdeckung verschlossen wird, in der Anzeigeköpfe und/oder Betätigungsköpfe angeordnet sind. Anzeigeköpfe und/oder Betätigungsköpfe sind jeweils den einzelnen im Meldegerät-Gehäuse 16 vorhandenen Melde- oder Kontaktbausteinen zugeordnet. Die Abdeckung mit Anzeigeköpfen und Betätigungsköpfen ist zeichnerisch nicht dargestellt. Die Abdeckung ist jedoch als Frontmodul im Sinne der vorliegenden Anmeldung zu interpretieren.

Die Melde- oder Befehlbausteine sind jeweils in einem flachprismatischem Gehäuse 3.1 aus Isolierstoff untergebracht. Jedes Gehäuse besteht aus zwei identischen Halbschalen 3.2. Die geometrische Gestaltung der Seiten ist etwa quadratisch oder hat RechteckForm. Die Anzeigeseite (vorn) 5.1 und die der Anzeigeseite gegenüber liegende Rückseite 5.2 sind relativ schmal.

Die Figuren 2, 3 und 4 zeigen Einzelheiten je nur einer Gehäusehälfte 3.2 des Meldebausteins 3A. In der Fig. 2 findet sich eine Darstellung des Inneren eines Meldebausteins. Hierin sind die Busanschluss-Kontakte 9 (siehe Fig. 3) nicht eingezeichnet. Als Befestigungsmittel zwischen Meldebaustein 3A und Frontmodul 6 sind in Richtung des Frontmoduls ragende Rasthaken 14' am Isolierstoff-Gehäuse 3.2 vorhanden. Im Meldebaustein sind ein Leuchtdiodenkopf 20 und (nicht dargestellte) Anschlussdrähte integriert, wobei der Leuchtdiodenkopf in einer Aufnahmeöffnung 3.3 eingebettet und gehalten ist.

In der Figur 2 ist eine LED 22 sichtbar, die sich in Reihenschaltung zum Leuchtmittel 20 befindet. Hier handelt es sich um eine einfache Maßnahme (von mehreren möglich anderen), die Spannung am Leuchtmittel 20 (und damit die Lichtstärke) zu reduzieren.

In den Figuren 2 und 3 sind Verdrahtung und Leiterbahnen der elektrischen und optischen Elemente weggelassen. Dargestellt sind jedoch besonders das Leuchtmittel 20, die Busanschluss-Kontakte 9 (zur Kontaktierung mit dem Bus-Kupplungsmodul 8) auf der Rückseite, die elektronische Schaltung (als CHIP 24) an der Gehäuseinnenwand und auf der Seitenfläche des Meldebausteins Kontakte 3.5 zur Kontaktierung eines aufrastbaren Parallel-Bausteins (vergleiche Kontaktbaustein 3B in Figur 1A oder 3B' in Fig. 1B). Die Fig. 2 zeigt weiterhin zwei Seitenkontakte 3.6 als Klemmkontakte für elektrische Anschlüsse, mit denen seitlich anschließbare Kontaktbausteine versorgt werden können.

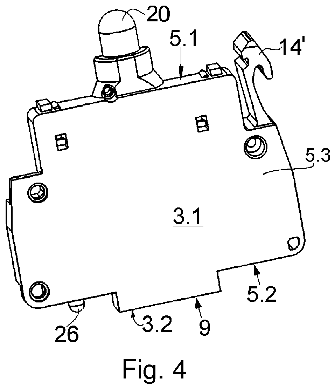

In den Figuren 3 und 4 ist ein optisches Anzeigemittel (LED oder OLED) 26 zur Anzeige des Bus-Status auf der Rückseite des Meldebausteins vorhanden.

Die Fig. 4 bringt eine Darstellung einer Halbschale eines Meldebausteins von außen (5.3). Sichtbar sind ein Rasthaken 14', ein Leuchtmittel 20, ein optisches Anzeigemittel 26 zur Anzeige des Bus-Status auf der Rückseite des Meldebausteins und (verdeckt) Steckkontakte 9 zum Kontaktieren mit der Steckbuchse 8' des Bus-Kupplungsmoduls 8.

### Bezugszeichen

- 3A: Anzeige- oder Meldebaustein
- 3B: Kontakt- oder Befehlsbaustein
- 3B' 3.1: Funktionsmodul-Gehäuse
- 3.2: Gehäuse-Halbschalen
- 3.3: Gehäuseöffnung (für Leuchtmittel oder dgl.)
- 3.4: Betätigungsstößel
- 3.5: Kontakte zu Parallel-Baustein (Befehlsbaustein 3B oder 3B')
- 3.6: Seitenkontakte
- 5.1: Anzeigeseite
- 5.2: Rückseite
- 5.3: Seitenfläche
- 6: Frontmodul
- 6A: Adapterrahmen
- 6B: Anzeigekopf (auch Betätigungskopf)
- 6B': Ring
- 6B": transparente Kappe (Druckknopf)
- 6C: Schaft zur Befestigung in Schalttafel-Öffnung
- 8A: erstes Bus-Kupplungsmodul - als fliegende Ausführung
- 8B: zweites Bus-Kupplungsmodul im Meldegerät-Gehäuse
- 8': Steckbuchse am Bus-Kupplungsmodul 8A
- 8": Anschluss-Kontakte (Schneidkontakte)
- 8'": Steckerleiste (Kontakte zur Leiterplatte 8.2)
- 8.1: Bus- und Versorgungsleitung (beispielsweise mit 24 V)
- 8.2: Bus- und Versorgungsleitung als Leiterplatte
- 9: Kontaktmittel (Stecker zur Steckbuchse am Bus- Kupplungsmodul)
- 10: Klemmenleiste für Bus- und Versorgungsleitung
- 14': Rasthaken für Frontbefestigung
- 14": Rasthaken für Rückenbefestigung
- 14'": Betätigungshebel
- 16: Meldegerät-Gehäuse (als Träger eines Frontmoduls)
- 17: vorderseitige Öffnung
- 20: Leuchtelement, Signal-LED (für Blinken oder Flackern)
- 22: Anzeige-LED in Reihe geschaltet mit Signal-LED
- 24: Elektronik-Baustein (Chip)
- 26: Bus-Status-LED

## Patentansprüche

1. Modular aufgebautes Meldegerät zur Vernetzung und Signalisierung mit gemeinsam an eine Bus- und Versorgungsleitung aufgeschalteten Befehls- und Meldegeräten, wobei das Meldegerät folgende Module umfasst:
- einen Meldebaustein (3A) mit einem optischen Anzeigemittel (20), insbesondere zur Anzeige eines Betriebszustands eines elektrischen Betriebsmittels und mit in seinem Gehäuse (3.1) gelagerten Elektronik-Baustein (24) zur Buskommunikation,
- ein dem Meldebaustein (3A) vorgelagertes Frontmodul (6) mit einem Anzeigekopf (6B),
- ein Bus-Kupplungsmodul (8A, 8B) zur Kupplung des Meldebaustein (3A) mit der Bus- und Versorgungsleitung (8.1, 8.2),
**dadurch gekennzeichnet, dass** im Elektronik-Baustein (24) mehrere einen zeitlichen Verlauf der Lichtleistung bestimmende Leistungsparameter des optischen Anzeigemittels (20) abänderbar abgelegt sind und die Leistungsparameter von einer zentralen Bus-Steuerung, welche Steuersignale für Anzeigemittel übermittelt,
ansteuerbar sind.

2. Modular aufgebautes Meldegerät nach Anspruch 1, **dadurch gekennzeichnet, dass** die Leistungsparameter folgende Lichtleistungen des optischen Anzeigemittels (20) umfassen
- Dauerlicht unterschiedlicher Helligkeit und
- zeitlichen Verlauf von bestimmten periodischen oder unperiodischen Blinkfolgen, ebenfalls unterschiedlicher Helligkeit.

3. Modular aufgebautes Meldegerät nach Anspruch 2, **dadurch gekennzeichnet, dass** eins der Leistungsparameter ein unregelmäßiges Flackerlicht ist.

4. Modular aufgebautes Meldegerät nach einem der vorhergehenden Ansprüche, **dadurch gekennzeichnet, dass** mindestens ein Leistungsparameter über ein Mess-Signal eines an der Bus- und Versorgungsleitung (8.1, 8.2) aufgeschalteten Helligkeitssensors einstellbar ist.

5. Modular aufgebautes Meldegerät nach einem der vorhergehenden Ansprüche, **dadurch gekennzeichnet, dass** das vorgelagerte Frontmodul (6) mit dem Meldebaustein (3A) verrastbar ausgebildet ist.

6. Modular aufgebautes Meldegerät nach Anspruch 5, **dadurch gekennzeichnet, dass** am Frontmodul (6) Befestigungsmittel (6C) zum lösbaren Einsetzen des Frontmoduls in eine Öffnung einer Schalttafel oder eines Schaltschranks vorhanden sind.

7. Modular aufgebautes Meldegerät nach einem der Ansprüche 1 bis 6, **dadurch gekennzeichnet, dass** das vorgelagerte Frontmodul als Abdeckung einer vorderseitigen Öffnung (17) eines das Meldegerät aufnehmenden Meldegerät-Gehäuses (16) ausgebildet ist.

8. Modular aufgebautes Meldegerät nach einem der vorhergehenden Ansprüche, **dadurch gekennzeichnet, dass** der Meldebaustein (3A) mit einem Betätigungsstößel (3.4) versehen ist, der von in dem Frontmodul (6) vorhandenen Betätigungsmitteln (6B"), die im Frontmodul (6) vorhanden sind, beaufschlagbar ist.

9. Modular aufgebautes Meldegerät nach einem der vorhergehenden Ansprüche, **dadurch gekennzeichnet, dass** ein optisches Anzeigemittel (26) zur Anzeige des Bus-Status auf der Rückseite (5.2) des Meldebausteins vorhanden ist.

10. Modular aufgebautes Meldegerät nach einem der vorhergehenden Ansprüche, **dadurch gekennzeichnet, dass** elektrische Kontaktmittel (9) auf der Rückseite (5.2) des Meldebausteins (3A) zum Kuppeln mit dem Bus-Kupplungsmodul (8A, 8B) vorhanden sind.

11. Modular aufgebautes Meldegerät nach einem der vorhergehenden Ansprüche, **dadurch gekennzeichnet, dass** im Meldebaustein (3A) elektrische Kontakte (3.5) ausgebildet sind zum Kontaktieren eines auf einer Seitenfläche (5.3) des Meldebausteins an den Meldebaustein (3A) aufrastbaren Kontakt oder Befehlsbausteins (3B').

## Claims

1. Modular signalling device for networking and signalling with command and signalling devices connected to a bus and supply line, wherein the signalling device comprises the following modules:
- a signalling module (3A) with an optical display means (20), in particular for displaying an operating state of an electrical equipment and having an electronics module (24) for bus communication in its housing (3.1),
- a front module (6) upstream of the signalling module (3A) with a display head (6B),
- a bus coupling module (8A, 8B) for coupling the signalling module (3A) to the bus and supply line (8.1, 8.2),
**characterised in that** in the electronic module (24) a plurality of performance parameters of the optical display means (20) determining a chronology of the light output are stored changeably and the performance parameters of a central bus control, which transmits control signals for display means, are activatable.

2. Modular signalling device according to claim 1, **characterised in that** the performance parameters comprise the following light outputs of the optical display means (20):
- continuous light of variable brightness and
- chronology of certain periodic or non-periodic flashing sequences, also of variable brightness.

3. Modular signalling device according to claim 2, **characterised in that** one of the performance parameters is an irregular flickering light.

4. Modular signalling device according to one of the preceding claims, **characterised in that** at least one power parameter is adjustable via a measuring signal of a brightness sensor connected to the bus and supply line (8.1, 8.2).

5. Modular signalling device according to one of the preceding claims, **characterised in that** the upstream front module (6) is formed latchable with the signalling module (3A).

6. Modular signalling device according to claim 5, **characterised in that** on the front module (6) fastening means (6C) are provided for detachable insertion of the front module in an opening of a control panel or a control cabinet.

7. Modular signalling device according to one of claims 1 to 6, **characterised in that** the upstream front module is formed as a cover of a front opening (17) of a signalling device housing (16) receiving the signalling device.

8. Modular signalling device according to one of the preceding claims, **characterised in that** the signalling module (3A) is provided with an actuating tappet (3.4) that can be acted upon by actuating means (6B") present in the front module (6), which are present in the front module (6).

9. Modular signalling device according to one of the preceding claims **characterised in that** an optical display means (26) for displaying the bus status on the back (5.2) of the signalling module is provided.

10. Modular signalling device according to one of the preceding claims, **characterised in that** electrical contact means (9) are provided on the back (5.2) of the signalling module (3A) for coupling with the bus coupling module (8A, 8B).

11. Modular signalling device according to one of the preceding claims, **characterised in that** in the signalling module (3A) electrical contacts (3.5) are formed for contacting a contact or command block (3B') latchable on a side surface (5.3) of the signalling module on the signalling module (3A).

## Revendications

1. Appareil de communication de fabrication modulaire pour la mise en réseau et la signalisation avec des appareils de commande et de signalisation branchés en commun sur un câble bus et d'alimentation, dans lequel l'appareil de communication comporte les modules suivants :
- un module de communication (3A) avec un moyen d'affichage optique (20), en particulier pour l'affichage d'un état de fonctionnement d'un moyen de fonctionnement électrique, et avec un module électronique (24) pour la communication bus logé dans son boîtier (3.1),
- un module avant (6) logé en amont du module de communication (3A) avec une tête d'affichage (6B),
- un module de couplage bus (8A, 8B) pour le couplage du module de communication (3A) avec le câble bus et d'alimentation (8.1, 8.2),
**caractérisé en ce que** plusieurs paramètres de puissance déterminant une étendue temporelle de la puissance lumineuse du moyen d'affichage optique (20) sont enregistrés de manière modifiable dans le module électronique (24) et les paramètres de puissance peuvent être commandés par une commande bus centrale qui transmet des signaux de commande pour des moyens d'affichage.

2. Appareil de communication de fabrication modulaire selon la revendication 1, **caractérisé en ce que** les paramètres de puissance comportent les puissances lumineuses suivantes du moyen d'affichage optique (20)
- lumière permanente de différente luminosité et
- étendue temporelle de suites d'éclats lumineux déterminées périodiques ou non périodiques, aussi de différente luminosité.

3. Appareil de communication de fabrication modulaire selon la revendication 2, **caractérisé en ce qu'**un des paramètres de puissance est une lumière scintillante irrégulière.

4. Appareil de communication de fabrication modulaire selon l'une quelconque des revendications précédentes, **caractérisé en ce qu'**au moins un paramètre de puissance est réglable par le biais d'un signal de mesure d'un capteur de luminosité branché sur le câble bus et d'alimentation (8.1, 8.2).

5. Appareil de communication de fabrication modulaire selon l'une quelconque des revendications précédentes, **caractérisé en ce que** le module avant (6) logé en amont est réalisé de manière encliquetable avec le module de communication (3A).

6. Appareil de communication de fabrication modulaire selon la revendication 5, **caractérisé en ce que** des moyens de fixation (6C) sont présents au niveau du module avant (6) pour l'insertion amovible du module avant dans une ouverture d'un tableau de commande ou d'une armoire de commande.

7. Appareil de communication de fabrication modulaire selon l'une quelconque des revendications 1 à 6, **caractérisé en ce que** le module avant logé en amont est réalisé en tant que recouvrement d'une ouverture côté avant (17) d'un boîtier d'appareil de communication (16) recevant l'appareil de communication.

8. Appareil de communication de fabrication modulaire selon l'une quelconque des revendications précédentes, **caractérisé en ce que** le module de communication (3A) est pourvu d'un coulisseau d'actionnement (3.4) qui peut être sollicité par des moyens d'actionnement (6B") présents dans le module avant (6), qui sont présents dans le module avant (6).

9. Appareil de communication de fabrication modulaire selon l'une quelconque des revendications précédentes, **caractérisé en ce qu'**un moyen d'affichage optique (26) est présent pour l'affichage du statut bus sur le côté arrière (5.2) du module de communication.

10. Appareil de communication de fabrication modulaire selon l'une quelconque des revendications précédentes, **caractérisé en ce que** des moyens de contact (9) électriques sont présents sur le côté arrière (5.2) du module de communication (3A) pour le couplage avec le module de couplage bus (8A, 8B).

11. Appareil de communication de fabrication modulaire selon l'une quelconque des revendications précédentes, **caractérisé en ce que** dans le module de communication (3A) des contacts électriques (3.5) sont réalisés pour l'établissement de contact d'un contact ou module de commande (3B') encliquetable sur une surface latérale (5.3) du module de communication sur le module de communication (3A).
